# EUROPEAN PATENT APPLICATION

(11) **EP 4 674 799 A1**
(43) Date of publication of application: **07.01.2026**
(21) Application number: 25186162.1
(22) Date of filing: 30.06.2025
(51) Int. Cl.: B66B 7/06

(54) **ELEVATOR SUSPENSION MEMBER WITH RODENT DETERRENT ADDITIVE**

(30) Priority: 01.07.2024 US 202418760518
(71) Applicant: Otis Elevator Company, Farmington, Connecticut 06032 (US)
(72) Inventor: GAO, Yingxin, Farmington, 06032 (US); ROOKEY, Ralle, Farmington, 06032 (US); TORLAI, David, Farmington, 06032 (US)
(74) Representative: Winter, Brandl - Partnerschaft mbB

(57) **Abstract**

A method and assembly includes at least one suspension member that supports an elevator car and facilitates movement of the elevator car within a hoistway and a jacket that encases the at least one suspension member. The jacket comprises a first type of material and a rodent deterrent additive is associated with the first type of material.

## Description

### BACKGROUND

Elevator systems are in widespread use for carrying passengers between various levels in buildings. Some elevator systems are traction-based in which a suspension assembly, sometimes referred to as roping, suspends the elevator car and a counterweight. The suspension assembly also facilitates movement of the elevator car when needed. Some elevator systems have suspension members that comprise flat belts that have tension members encased in a compressible polymer jacket. Under certain operating conditions, such suspension members may become accessible to rodents. This type of contact may lead to some undesirable effects to the suspension members over time.

### SUMMARY

An illustrative example assembly includes: at least one suspension member that supports an elevator car and facilitates movement of the elevator car within a hoistway; a jacket that encases the at least one suspension member, wherein the jacket comprises a first type of material; and a rodent deterrent additive associated with the first type of material.

In addition to one or more of the features described herein, or as an alternative, the rodent deterrent additive is mixed together with the first type of material such that the rodent deterrent additive is distributed throughout the jacket.

In addition to one or more of the features described herein, or as an alternative, the rodent deterrent additive only covers pre-identified portions of the jacket.

In addition to one or more of the features described herein, or as an alternative, the jacket has a first surface, a second surface facing opposite the first surface, and edges extending between the first surface and the second surface, and wherein the pre-identified portions of the jacket comprise the edges.

In addition to one or more of the features described herein, or as an alternative, the jacket has a first surface, a second surface facing opposite the first surface, and edges extending between the first surface and the second surface, and wherein the pre-identified portions of the jacket comprise at least a portion of at least one of the first surface and the second surface.

In addition to one or more of the features described herein, or as an alternative, the jacket has a first surface, a second surface facing opposite the first surface, and edges extending between the first surface and the second surface, and wherein the rodent deterrent additive is incorporated into an ink that is printable on at least one of the first surface, the second surface, or the edges.

In addition to one or more of the features described herein, or as an alternative, the ink comprises one continuous line extending along at least one of the first surface and the second surface.

In addition to one or more of the features described herein, or as an alternative, the ink comprises one continuous line extending along each of the edges.

In addition to one or more of the features described herein, or as an alternative, the ink comprises character printing extending along at least one of the first surface and the second surface.

In addition to one or more of the features described herein, or as an alternative, the rodent deterrent additive comprises a natural repellant material.

In addition to one or more of the features described herein, or as an alternative, the rodent deterrent additive comprises a chemical material.

In addition to one or more of the features described herein, or as an alternative, the at least one suspension member comprises a plurality of tension members encased within the jacket.

An illustrative example method includes: encasing a plurality of tension members within a jacket material to form a suspension assembly encased within a jacket; and associating a rodent deterrent additive with the jacket material.

In addition to one or more of the features described herein, or as an alternative, the method includes mixing the rodent deterrent additive together with the jacket material prior to encasing the plurality of tension members.

In addition to one or more of the features described herein, or as an alternative, the jacket has a first surface, a second surface facing opposite the first surface, and edges extending between the first surface and the second surface, and the method includes only covering pre-identified portions of the jacket with the rodent deterrent additive.

In addition to one or more of the features described herein, or as an alternative, the pre-identified portions of the jacket comprise the edges.

In addition to one or more of the features described herein, or as an alternative, the method includes incorporating the rodent deterrent additive into an ink and printing the ink on at least one of the first surface, the second surface, or the edges.

In addition to one or more of the features described herein, or as an alternative, the ink comprises at least one of: a continuous line extending along at least one of the first surface and the second surface; a continuous line extending along each of the edges; or character printing extending along at least one of the first surface and the second surface.

In addition to one or more of the features described herein, or as an alternative, the rodent deterrent additive comprises a natural repellant material.

In addition to one or more of the features described herein, or as an alternative, the rodent deterrent additive comprises a chemical material.

The various features and advantages of an example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system.
Figure 2 schematically illustrates a portion of an example suspension member.
Figure 3 schematically illustrates one example of a cross-section of a suspension member with a deterrent additive.
Figure 4 schematically illustrates another example of a top or bottom surface of a suspension member with a deterrent additive.
Figure 5 schematically illustrates another example of a side edge of a suspension member with a deterrent additive.
Figure 6 is a flowchart diagram of an example method associating a deterrent additive with a jacket material for a suspension member.

### DETAILED DESCRIPTION

Embodiments of this disclosure provide an elevator suspension member that includes rodent deterrent additive to discourage contact with rodents.

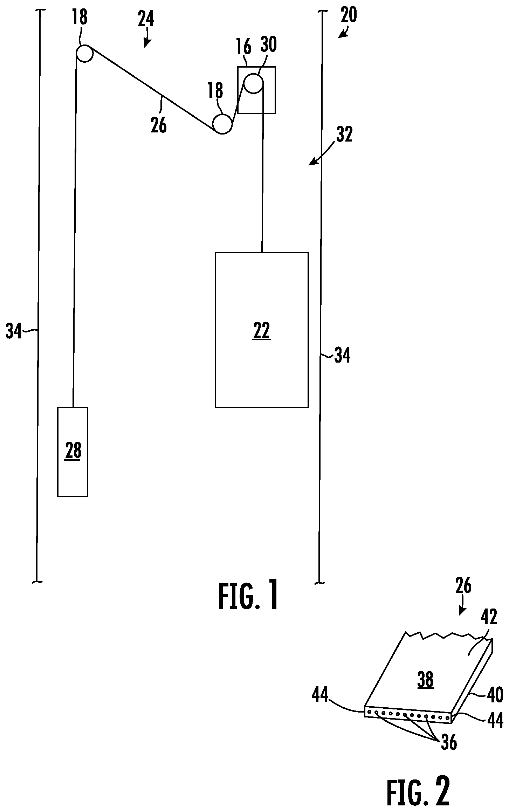

Figure 1 schematically illustrates selected portions of an elevator system 20. An elevator car 22 is supported by a roping arrangement or suspension assembly 24 that includes a plurality of suspension members 26. In one example, the elevator system 20 is a traction-based system in which a controller controls operation of a machine 16 to cause selected movement of the elevator car 22. The elevator car 22 is coupled to a counterweight 28 by the suspension members 26. The suspension members 26 are driven by the machine 16 around a traction sheave 30, as well as any additional deflector sheaves 18, as the elevator car 22 moves within a hoistway 32 between landings or levels.

Figure 2 schematically illustrates a portion of an example suspension member 26. In the illustrated embodiment, the suspension member 26 is a flat belt including a plurality of tension members 36 encased in a jacket 38 of a compressible material, such as polyurethane or other similar materials for example. In many embodiments, the tension members 36 are steel cords, and the suspension member 26 is referred to as a coated steel belt (CSB), for example. Other embodiments include tension members that are made of different materials and jacket surfaces that are not flat, such as those that incorporate ribs, grooves, or similar features.

The hoistway 32 may be situated in a variety of locations within a building, depending on the building configuration. Under certain operating conditions, or in certain environments, the suspension members 26 may come into contact with rodents such as rats, mice, squirrels, etc., which may gnaw on portions of the jacket 38. In certain instances, this contact can cause undesirable effects such as fraying, cracking or splitting of the jacket 38, especially along edges of the jacket 38.

As shown in Figure 2, the jacket 38 has an external facing side 40 and a traction side 42, e.g. internal facing side opposite of the external facing side 40, which is supported on the traction sheave 30. Edges 44 extend between the external facing side 40, e.g., a first side, and the traction side 42 e.g., a second side. In implementations, the jacket 38 may be made from a jacket material 50, e.g. a first type of material. In one example, the jacket material 50 may be an elastomeric material such as a thermoplastic polyurethane (TPU) elastomer, for example.

In some applications, a rodent gnawing test is conducted on the suspension member 26 as required by certain requirements and standards. The subject disclosure provides a suspension member 26 where an additional rodent deterrent additive 52, e.g., a second type of material, is associated with the jacket material 50. In some implementations, the rodent deterrent additive 52 is mixed with the jacket material 50 such that the additive is distributed throughout the suspension member 26. In some implementations, the rodent deterrent additive 52 is only applied to one or more areas of the suspension member 26 that are most likely to experience undesirable contact from rodents.

In implementations, the rodent deterrent additive 52 may be a type of material that is different than the jacket material 50.

In implementations, the additive 52 may comprise a natural repellent. Examples of natural repellants include pepper, essence oil, caffeine, salt, wasabi, or other similar repellants.

In implementations, the additive may comprise a chemical additive. Examples of chemical additives include denatonium benzoate (DB), capsaicum oleroresin (CO) impregnated in mesoporous silica (SiCO), or other similar chemical additives. The DB and SiCO have been shown to be the most effective; however, their concentrations need to be well controlled to keep them environmentally friendly. In implementations, the concentration for DB should be around 1-2 wt%, and the concentration for SiCO ranges from 12-24 wt% depending on a thickness of the applied material. In implementations, the final concentration for each suspension member application should be experimentally determined. Those skilled in the art who have the benefit of this description will be able to determine the concentration that would be applied for these purposes.

In implementations, the additives can either be mixed with other chemicals or materials to make the jacket 38, or the additive could be included in ink materials that can be printed on surfaces 40, 42 or on the edges 44 along the suspension member 26. In implementations, the ink may be more densely printed at a top or lower bottom of the suspension member 26 where rodents are more likely to have access.

In implementations, the rodent deterrent additive 52 covers only pre-identified portions of the jacket 38. In one example, the pre-identified portions of the jacket 38 are areas that are most susceptible to contact from rodents.

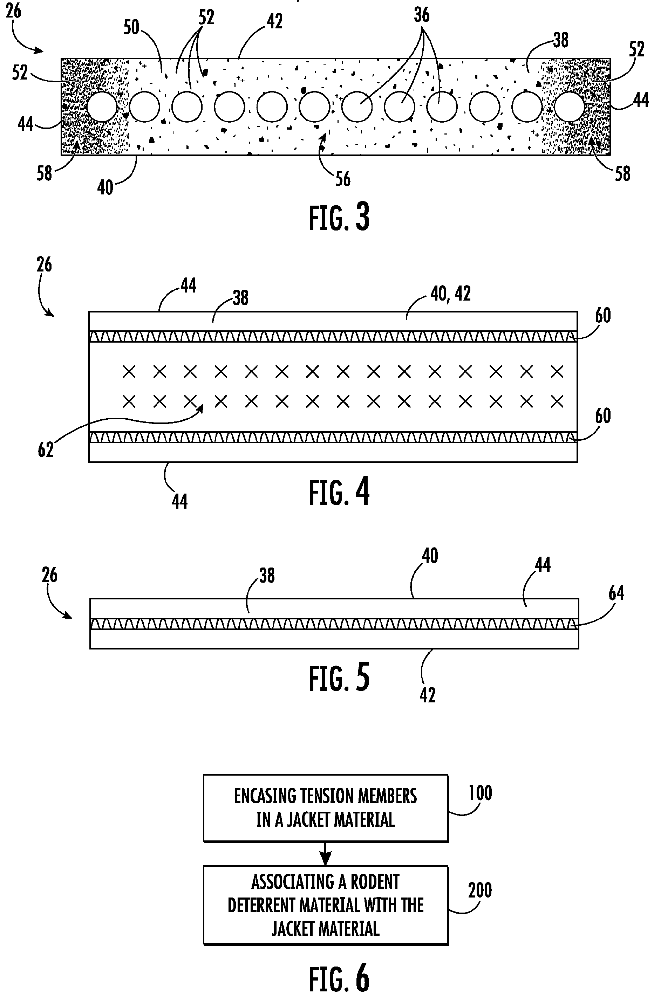

As shown in Figure 3, the rodent deterrent additive 52 is mixed together with the first type of material, e.g. an elastomer, for the jacket 38 such that the additive 52 is distributed throughout the jacket 38. In some implementations, the additive 52 may be distributed evenly throughout the cross-section of the suspension member 26 as indicated at 56. In some implementations, the additive 52 may be distributed to be more concentrated in certain portions of the suspension member 26 such as the edges 44, for example, as indicated at 58.

In some implementations, the rodent deterrent additive 52 only covers pre-identified portions of the jacket, e.g. surface portions.

In some implementations, the pre-identified portions of the jacket 38 comprise the edges 44.

In some implementations, the pre-identified portions of the jacket 38 comprise at least a portion of at least one of the first surface 40 and the second surface 42.

In some implementations, the rodent deterrent additive 52 is incorporated into an ink that is printable on at least one of the first surface 40, the second surface 42, or the edges 44.

As shown in Figure 4, the ink may be one continuous line 60 extending along at least one of the first surface and the second surface. In some implementations, the ink comprises character printing 62 extending along at least one of the first surface 40 and the second surface 42. In some implementations, one or more lines 60 may extend along longitudinally extending edge portions of the first 40 and/or second 42 surfaces.

As shown in Figure 5, the ink may comprise one continuous line 64 extending along each of the edges 44.

Figure 6 shows a flowchart for one example method of forming a suspension member 26 with a rodent deterrent additive. In implementations, the method includes encasing a plurality of tension members within a jacket material to form a suspension assembly encased within a jacket as indicated at 100, and associating a rodent deterrent additive with the jacket material as indicated at 200.

The method may include any of the following implementations either alone or in any combination thereof. In one implementation, the method may include mixing the additive together with the jacket material prior to encasing the plurality of tension members.

In one implementation, the method may include only covering pre-identified portions of the jacket with the rodent deterrent additive.

In one implementation, the method may include incorporating the rodent deterrent material into an ink and printing the ink on at least one of the first surface, the second surface, or the edges. The printing may include information that may be either printed normal or may be additional print added to the suspension member at portions that are more likely to get chewed.

The subject disclosure describes a method and apparatus for deterring rodents from chewing the jacket by adding the rodent repellent additive to the jacket material. In implementations, the repellent additive can be added as a masterbatch into the jacket polymer during processing of the jacket. In implementations, the additive is filled with mixture of odor emitting chemicals and/or bitter compounds that create unacceptable taste and irritation of mucus membrane to keep rodents, squirrels, terminates, etc. away from the suspension members. In implementations, commercially available additives are used that are human safe and eco-friendly. This facilitates protection of the suspension member jacket from damage by rodents.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An assembly comprising:
at least one suspension member that supports an elevator car and facilitates movement of the elevator car within a hoistway;
a jacket that encases the at least one suspension member, wherein the jacket comprises a first type of material; and
a rodent deterrent additive associated with the first type of material.

2. The assembly of claim 1, wherein the rodent deterrent additive is mixed together with the first type of material such that the rodent deterrent additive is distributed throughout the jacket.

3. The assembly of claim 1, wherein the rodent deterrent additive only covers pre-identified portions of the jacket.

4. The assembly of claim 3, wherein the jacket has a first surface, a second surface facing opposite the first surface, and edges extending between the first surface and the second surface, and wherein the pre-identified portions of the jacket comprise the edges.

5. The assembly of claim 3, wherein the jacket has a first surface, a second surface facing opposite the first surface, and edges extending between the first surface and the second surface, and wherein the pre-identified portions of the jacket comprise at least a portion of at least one of the first surface and the second surface.

6. The assembly of claim 1, wherein the jacket has a first surface, a second surface facing opposite the first surface, and edges extending between the first surface and the second surface, and wherein the rodent deterrent additive is incorporated into an ink that is printable on at least one of the first surface, the second surface, or the edges, preferably wherein the ink comprises one continuous line extending along at least one of the first surface and the second surface or extending along each of the edges, or the ink comprises character printing extending along at least one of the first surface and the second surface.

7. The assembly of claim 1, wherein the rodent deterrent additive comprises a natural repellant material or a chemical material.

8. The assembly of claim 1, wherein the at least one suspension member comprises a plurality of tension members encased within the jacket.

9. A method comprising:
encasing a plurality of tension members within a jacket material to form a suspension assembly encased within a jacket; and
associating a rodent deterrent additive with the jacket material.

10. The method of claim 9, including mixing the rodent deterrent additive together with the jacket material prior to encasing the plurality of tension members.

11. The method of claim 9, wherein the jacket has a first surface, a second surface facing opposite the first surface, and edges extending between the first surface and the second surface, and including only covering pre-identified portions of the jacket with the rodent deterrent additive.

12. The method of claim 11, wherein the pre-identified portions of the jacket comprise the edges.

13. The method of claim 11, including incorporating the rodent deterrent additive into an ink and printing the ink on at least one of the first surface, the second surface, or the edges.

14. The method of claim 13, wherein the ink comprises at least one of:
a continuous line extending along at least one of the first surface and the second surface;
a continuous line extending along each of the edges; or
character printing extending along at least one of the first surface and the second surface.

15. The method of claim 10, wherein rodent deterrent additive comprises a natural repellant material or a chemical material.
